(19) Europäisches Patentamt

European Patent Office

Office européen des brevets

(11) **EP 1 603 128 A2**

(12) **EUROPEAN PATENT APPLICATION**

(43) Date of publication:
**07.12.2005 Bulletin 2005/49**

(51) Int Cl.7: **G11B 7/135**, G11B 7/125

(21) Application number: **05252634.0**

(22) Date of filing: **27.04.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **11.05.2004 JP 2004141192**

(71) Applicant: **CANON KABUSHIKI KAISHA
Ohta-ku, Tokyo (JP)**

(72) Inventor: **Nishikawa, Koichiro,
c/o Canon Kabushiki Kaisha
Tokyo (JP)**

(74) Representative:
**Beresford, Keith Denis Lewis et al
Beresford & Co.,
16 High Holborn
London WC1V 6BX (GB)**

(54) **Optical pickup apparatus including optical system of chromatic aberration correction**

(57)     Provided is an optical pickup apparatus which is inexpensive and has sufficient chromatic aberration correction performance, and which includes a chromatic aberration correction optical system (13) composed of two lens groups (11,12) having positive power and negative power, wherein the lens group (12) having the positive power is constructed such that a focal distance thereof does not change or becomes shorter when a wavelength of a semiconductor laser (1) lengthens. One of the lens groups (11,12) is moved relative to the other lens group to correct chromatic aberration caused by a change in substrate thickness.

## FIG. 1

**Description**

The present invention relates to an optical system of an optical pickup apparatus, and more particularly to an optical system for chromatic aberration correction.

In recent years, in order to realize a high recording density of an optical disk apparatus, techniques for shortening a wavelength of a light source and increasing the NA of an objective lens have been actively researched. Commercialization of an apparatus using a 405 nm semiconductor laser and an objective lens having the NA of 0.85 is started.

When the short-wavelength light source and the high-NA objective lens are employed, there are the following fundamental problems:

(1) The optical disk apparatus is easily affected by the tilt of the disk;
(2) The optical disk apparatus is easily affected by a thickness error of a transparent substrate; and
(3) The optical disk apparatus is easily affected by wavelength shift of the light source.

Among those, the problem (1) is solved by thinning the transparent substrate. For example, a thickness of the transparent substrate is set to about 100 $\mu$m.

In order to solve the problems (2) and (3), there has been made an attempt to devise an optical system. For example, in order to solve the problem (2) in which the transparent substrate has a thickness error, there has been made an attempt to use a beam expander composed of lenses and to cancel caused spherical aberration by changing an interval between the lenses.

With respect to the problem (3), there have been studied the following methods of correcting chromatic aberration caused when the wavelength of the light source varies, for example, (a) a method of using a suitable glass material for the lenses composing the beam expander to reduce defocus due to the chromatic aberration, which is significantly caused particularly in the objective lens when the wavelength of the light source varies, and (b) a method of using a suitable glass material for a bonded collimator lens to reduce the defocus related to the chromatic aberration.

The above-mentioned techniques have been disclosed in, for example, Japanese Patent Application Laid-Open No. 2002-236252.

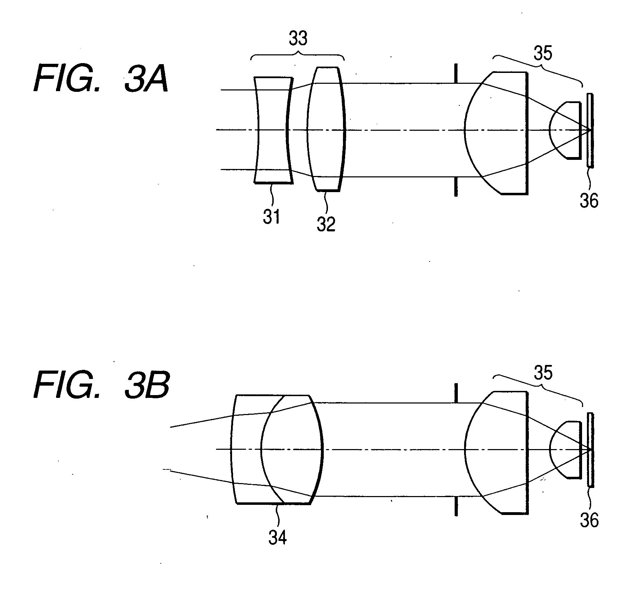

Fig. 3A shows the case where the beam expander is used. To explain it briefly, as shown in Fig. 3A, a beam expander 33 is composed of a negative power lens 31 and a positive power lens 32. The lens 31 is made of a glass material having relatively high dispersion and the lens 32 is made of a glass material having relatively low dispersion, whereby the defocus caused at the objective lens due to wavelength shift is reduced.

Fig. 3B shows the case where the collimator lens is used. As shown in Fig. 3B, a collimator lens 34 is composed of a negative power lens and a positive power lens. The negative power lens is made of a glass material having relatively high dispersion as in the above-mentioned case, and an aspherical surface for obtaining optical performances is used. Therefore, the defocus caused at the objective lens due to the wavelength shift is reduced. In Fig. 3B, reference numeral 35 denotes an objective lens and 36 denotes a transparent substrate of an optical disk.

However, the above-mentioned conventional cases have the following problems. That is, in the case of the beam expander, although the glass material having low dispersion is used for the positive power lens, the positive power lens acts to increase the defocus caused at the objective lens due to the wavelength shift. Therefore, a load on the negative power lens for correcting the chromatic aberration becomes larger. Thus, for example, when a single element lens made of glass is used as the objective lens, correction is likely to become insufficient.

In the case of the collimator lens, an aspherical lens (including a special aspherical surface such as a diffractive grating) is used, and the aspherical lens and the spherical lens are bonded to each other. Therefore, a level of difficulty in manufacturing increases, so that the collimator lens becomes expensive. Thus, the optical pickup apparatus is likely to become an expensive device.

It is an object of the present invention to provide an optical pickup apparatus which is inexpensive and may have sufficient chromatic aberration correction performance.

An optical pickup apparatus according to the present invention includes: a light source; an objective lens for condensing light emitted from the light source to a recording surface of an optical recording medium including a transparent substrate; two lens groups for producing chromatic aberration for reducing chromatic aberration of the objective lens which is caused corresponding to a variation in wavelength of the light emitted from the light source; and a drive mechanism capable of changing an interval between the two lens groups to correct spherical aberration caused by a change in thickness of the transparent substrate.

A number of embodiments of the invention will now be described, by way of example only, with reference to the accompanying drawings, in which:

Fig. 1 is a view showing an optical system of an optical pickup apparatus according to an embodiment of the present invention;

Fig. 2 is a graph showing a relationship between a thickness error of a transparent substrate and a distance between lens groups for correcting the thickness error in the case where a first lens group is moved; and

Figs. 3A and 3B are explanatory views showing a conventional method of reducing defocus due to the wavelength shift.

(First Embodiment)

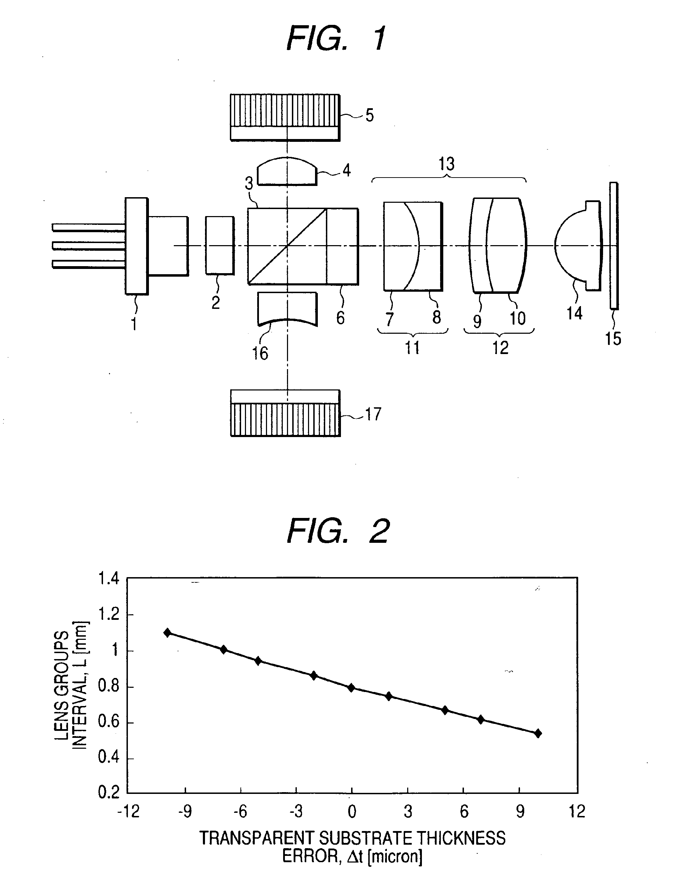

Fig. 1 is a structural view showing an optical pickup apparatus according to a first embodiment of the present invention. In Fig. 1, a light beam emitted from a semiconductor laser 1 serving as a light source is separated into a main beam and two sub-beams by a diffractive grating 2. The sub-beams are used to generate serve signals for DPP (differential push-pull). The main beam is used to record information or reproduce recorded information.

A part of the light beams having passed through the diffractive grating 2 is reflected on a polarizing beam splitter (PBS) 3 and condensed to a monitor PD 5 by a condensing lens 4. An output of the monitor PD 5 is used to control emission power of the semiconductor laser 1.

A light beam having passed through the PBS 3 passes through a λ/4 plate 6 and is converted into a parallel light flux by a collimator lens 13. The parallel light flux passes through a transparent substrate and is imaged onto an information recording surface of an optical disk 15 by an objective lens 14. The optical disk 15 is composed of the transparent substrate and the information recording surface.

The collimator lens 13 includes two lens groups, that is, a first lens group 11 composed of spherical lenses 7 and 8 and a second lens group 12 composed of spherical lenses 9 and 10. An interval between the first lens group 11 and the second lens group 12 is changeable. The interval between the first and second lens groups is changed to correct spherical aberration. For example, this can be realized by driving the first lens group 11 and the second lens group 12 relative to each other in an optical axis direction using drive means such as a stepping motor.

A light beam reflected on the optical disk 15 passes through the objective lens 14, the collimator lens 13, and the λ/4 plate 6 again. Then, the light beam is reflected on the PBS 3 and condensed onto an RF servo PD 17 by a sensor lens 16. An information signal and the servo signals are obtained based on an output from the RF servo PD 17.

A wavelength of the semiconductor laser 1 for information reproduction is about 407 nm at room temperature. The NA of the objective lens 14 is 0.85 and a focal distance thereof is 1.1765 mm.

Table 1 shows design values of a projection system in this embodiment. Here, N(407) denotes a refractive index at a wavelength of 407 nm, and ΔN denotes a change in refractive index when the wavelength is increased by 1 nm and corresponds to dispersion in the vicinity of the wavelength of 407 nm. In addition, r denotes a lens curvature and d denotes a surface interval.

When a distance in the optical axis direction is given by X, a height in a direction perpendicular to the optical axis is given by h, and a conic coefficient is given by k, an aspherical shape of the objective lens is expressed by the following equation.

$$X = \frac{h^2/r}{1 + \sqrt{1 - (1+k)h^2/r^2}} + Bh^4 + Ch^6 + Dh^8 + Eh^{10} + Fh^{12} + Gh^{14}$$

Table 2 shows aspherical coefficients k and B to G.

Table 1

|   | Remarks | r | D | N(407) | ΔN |
|---|---|---|---|---|---|
| 1 | LD | ∞ | 0.78 | | |
| 2 | | ∞ | 0.25 | 1.52947 | -0.00008 |
| 3 | | ∞ | 1.19 | | |
| 4 | Diffractive grating | ∞ | 1 | 1.52947 | -0.00008 |
| 5 | | ∞ | 1.6 | | |

Table 1   (continued)

| | Remarks | r | D | N(407) | ΔN |
|---|---|---|---|---|---|
| 6 | PBS | ∞ | 2.6 | 1.72840 | -0.00042 |
| 7 | λ/4 plate | ∞ | 1.15 | 1.56020 | -0.00020 |
| 8 | | ∞ | 1.46 | | |
| 9 | | ∞ | 1.29 | 1.58345 | -0.00014 |
| 10 | | -2.28 | 0.71 | 1.80480 | -0.00053 |
| 11 | Collimator lens | ∞ | 0.8 | | |
| 12 | | 13.49 | 0.74 | 1.80480 | -0.00053 |
| 13 | | 4.967 | 1.26 | 1.58345 | -0.00014 |
| 14 | | -4.411 | 6.5 | | |
| 15 (Aspherical surface 1) | Objective lens | 0.89427 | 1.57 | 1.70930 | -0.00021 |
| 16 (Aspherical surface 2) | | -3.38795 | 0.27 | | |
| 17 | Transparent | ∞ | 0.08 | 1.62068 | -0.00038 |
| 18 | substrate | ∞ | 0 | | |

Table 2

| Aspherical surface coefficient. | Aspherical surface 1 | Aspherical surface 2 |
|---|---|---|
| k | -4.71569E-01 | -8.03122E+02 |
| B | 1.85624E-02 | 6.93685E-01 |
| C | -3.32437E-03 | -7.23881E-01 |
| D | 2.00843E-02 | -1.08028E+01 |
| E | -2.46799E-02 | 5.02375E+01 |
| F | 3.71610E-02 | -6.88792E+01 |
| G | -2.00730E-02 | 0 |

As is apparent from Table 1, the collimator lens 13 is composed of only the spherical lenses and becomes an optical element which is easily manufactured at low cost.

Next, the case where the transparent substrate of the optical disk 15 has a thickness error will be described. When the transparent substrate has the thickness error, spherical aberration is caused as known up to now. Therefore, in the optical system according to this embodiment, the interval between the first lens group 11 and the second lens group 12 in the collimator lens 13 is changed to correct the caused spherical aberration.

Fig. 2 shows a relationship between the thickness error of the transparent substrate and a distance between the lens groups for correcting the thickness error. Fig. 2 shows a relationship in the case where the first lens group 11 is moved. The second lens group 12 is fixed. A moving distance per μm of thickness error of the transparent substrate is about 28 μm.

In this embodiment, when the first lens group 11 is moved. As the result, the entire length of the optical system does not change, and therefore a compact optical system can be constructed.

As is apparent from Fig. 1 and Table 1, the first lens group 11 is a lens group having negative power and the second lens group 12 is a lens group having positive power. Therefore, the collimator lens 13 becomes a telephoto system, a distance between the semiconductor laser 1, and the collimator lens 13 can be shortened to realize a compact optical system.

Next, the case where the wavelength of the semiconductor laser 1 changes will be described. A problem arises in the case where focus servo control cannot be performed in keeping with an operation change, which corresponds to, for example, the time immediately after operation is shifted from reproduction to recording. When the wavelength relatively slowly changes, defocus caused by a change in wavelength is canceled by focus servo.

A wavelength shift when operation is shifted from reproduction to recording is about 1 nm in the case of a blue-violet semiconductor laser and the wavelength generally lengthens. At this time, in the case of the objective lens shown in Table 1, when the wavelength is lengthened by 1 nm, the refractive index reduces. The positive power of the objective lens reduces to lengthen the focal distance, with the result that defocus of 0.243 μm is caused. When NA is 0.85 and the wavelength is 407 nm, the focal depth is about 0.28 μm. Therefore, when the wavelength shift is 2 nm, defocus that significantly exceeds the focal depth takes place, so that such a case is not suitable for recording/reproduction of information.

Thus, as shown in Table 1, with respect to the collimator lens 13 in this embodiment, the first lens group 11 is composed of the lens 7 having relatively low dispersion and positive power and the lens 8 having relatively high dispersion and negative power. The second lens group 12 is composed of the lens 9 having relatively high dispersion and negative power and the lens 10 having relatively low dispersion and positive power. When the wavelength lengthens, the refractive index is changed to reduce the negative power of the first lens group 11 and increase the positive power of the second lens group 12.

In particular, when the lens group having the positive power is made of a single glass material or composed of a single lens, the positive power becomes smaller as the wavelength lengthens. Therefore, the defocus of the objective lens is increased to cause larger defocus. That is, if at least power does not change, it can be said that there is chromatic aberration correction performance.

In this view, in this embodiment, even in the case of the lens group having the positive power as shown in Table 1, a glass material is used so as to cancel the defocus of the objective lens which is caused by an increase in wavelength. As a result, when the wavelength lengthens, a focal distance of the second lens group 12 becomes shorter (or does not change) and power becomes larger. Thus, it is possible to provide sufficient chromatic aberration correction performance.

With respect to the lens group having the negative power, even when it is composed of a single lens, the negative power is reduced by a change in refractive index. In this embodiment, the two lenses are used such that the degree of change in power becomes larger. Therefore, the lens group includes the lens having high dispersion and larger negative power.

Table 3 shows a change in focal distance, which corresponds to a change in power of each of the lens groups.

Table 3

|  | f(407) | f(408) |
|---|---|---|
| First lens group | -10.3004 | -10.3186 |
| Second lens group | 6.9678 | 6.9676 |

Here, f(407) denotes a focal distance at a wavelength of 407 nm and f(408) denotes a focal distance at a wavelength of 408 nm. As is apparent from Table 3, a negative focal distance of the first lens group 11 lengthens (that is, power becomes smaller) and a focal distance of the second lens group 12 slightly shortens.

Therefore, the defocus of the objective lens which is caused by the wavelength shift, that is, the chromatic aberration can be sufficiently corrected.

Table 4 shows a result related to the entire projection optical system.

Table 4

|  | Single objective lens | Entire system | Breakdown (extent of contribution) | |
|---|---|---|---|---|
|  |  |  | First group | Second group |
| Defocus amount | 0.243 μm | 0.141 μm | (0.091 μm) | (0.007 μm) |

As is also apparent from Table 4, the lens group having the positive power (second lens group) also corrects the chromatic aberration. As a result, even when the wavelength shift is 2 nm, the defocus amount is made smaller than the focal depth. Therefore, even during a period in which focus servo cannot follow the shift, the recording/reproduction performance can be ensured.

(Second Embodiment)

Next, a second embodiment of the present invention will be described. Table 5 shows design values in the second embodiment, Table 6 shows change in focal distance of each lens group, and Table 7 shows a result of chromatic aberration correction in the entire projection optical system. An optical system of an optical pickup apparatus according to this embodiment has the same structure as that shown in Fig. 1. An objective lens is also identical to that in the first embodiment.

Table 5

|  | Remarks | R | D | N(407) | ΔN |
|---|---|---|---|---|---|
| 1 | LD | ∞ | 0.78 |  |  |
| 2 |  | ∞ | 0.25 | 1.52947 | -0.00008 |
| 3 |  | ∞ | 1.191 |  |  |
| 4 | Diffractive grating | ∞ | 1 | 1.52947 | -0.00008 |
| 5 |  | ∞ | 1.605 |  |  |
| 6 | PBS | ∞ | 2.6 | 1.72840 | -0.00042 |
| 7 | λ/4 plate | ∞ | 1.15 | 1.56020 | -0.00020 |
| 8 |  | ∞ | 1.46 |  |  |
| 9 | Collimator lens | 28.405 | 1.3 | 1.58345 | -0.00014 |
| 10 |  | -2.4 | 0.7 | 1.86286 | -0.00055 |
| 11 |  | ∞ | 0.8 |  |  |
| 12 |  | 14.622 | 0.7 | 1.86286 | -0.00055 |
| 13 |  | 5.398 | 1.3 | 1.58345 | -0.00014. |
| 14 |  | -4.195 | 6.5 |  |  |
| 15 | Objective lens | 0.89427 | 1.57 | 1.70930 | -0.00021 |
| 16 |  | -3.38795 | 0.27 |  |  |
| 17 | Transparent substrate | ∞ | 0.08 | 1.62068 | -0.00038 |
| 18 |  | ∞ | 0 |  |  |

Table 6

|  | f (407) | f(408) |
|---|---|---|
| First lens group | -10.6477 | -10.6699 |
| Second lens group | 6.9717 | 6.9713 |

Table 7

|  | Single objective lens | Entire system | Breakdown (extent of contribution) | |
|---|---|---|---|---|
|  |  |  | First group | Second group |
| Defocus amount | 0.243 μm | 0.123 μm | (0.111 μm) | (0.009 μm) |

In the second embodiment, a state of the spherical aberration correction is substantially the same as that in the first embodiment. However, the chromatic aberration correction in both of the first lens group and the second lens group is further improved.

Thus, it is possible to provide an inexpensive and compact optical pickup apparatus that can correct spherical aberration and chromatic aberration.

**Claims**

1.  An optical pickup apparatus, comprising:

    a light source;
    an objective lens for condensing light emitted from the light source to a recording surface of an optical recording medium including a transparent substrate;
    two lens groups for producing chromatic aberration for reducing chromatic aberration of the objective lens which is caused corresponding to a variation in wavelength of the light emitted from the light source; and
    a drive mechanism capable of changing an interval between the two lens groups to correct spherical aberration caused by a change in thickness of the transparent substrate.

2.  An optical pickup apparatus according to claim 1, wherein the two lens groups are composed of a positive power lens group and a negative power lens group and a focal distance of the positive power lens group does not change or becomes shorter when the wavelength of the light emitted from the light source lengthens.

3.  An optical pickup apparatus according to claim 2, wherein the two lens groups are composed of at least three spherical lenses.

4.  An optical pickup apparatus according to claim 3, wherein the positive power lens group is composed of a negative power lens and a positive power lens.

5.  An optical pickup apparatus according to claim 2, wherein the negative power lens is made of a glass material having relatively high dispersion and the positive power lens is made of a glass material having relatively low dispersion.

6.  An information recording and reproducing apparatus for recording information on the optical recording medium and reproducing information from the optical recording medium using the optical pickup apparatus according to claim 1.

# FIG. 1

# FIG. 2

FIG. 3A

FIG. 3B